(19) **Europäisches Patentamt**

**European Patent Office**

**Office européen des brevets**

(11) Veröffentlichungsnummer: **0 509 237 B1**

(12) **EUROPÄISCHE PATENTSCHRIFT**

(45) Veröffentlichungstag der Patentschrift: **20.12.95**

(51) Int. Cl.⁶: **B60T 8/26**

(21) Anmeldenummer: **92104233.9**

(22) Anmeldetag: **12.03.92**

(54) **Bremsdruckregelanlage für ein Fahrzeug**

(30) Priorität: **16.04.91 DE 4112388**

(43) Veröffentlichungstag der Anmeldung:
**21.10.92 Patentblatt 92/43**

(45) Bekanntmachung des Hinweises auf die
Patenterteilung:
**20.12.95 Patentblatt 95/51**

(84) Benannte Vertragsstaaten:
**DE FR IT SE**

(56) Entgegenhaltungen:
**DE-A- 3 323 402**
**DE-A- 3 923 955**
**DE-A- 4 007 360**
**US-A- 4 962 971**

(73) Patentinhaber: **ROBERT BOSCH GMBH**
**Postfach 30 02 20**
**D-70442 Stuttgart (DE)**

(72) Erfinder: **Willmann, Karl-Heinz, Dipl.-Ing.**
**Arndtstrasse 45**
**W-7149 Freiberg (DE)**
Erfinder: **Urban, Werner, Dipl.-Ing.**
**Schillerstrasse 27**
**W-7257 Ditzingen 4 (DE)**
Erfinder: **Binder, Jürgen, Dipl.-Ing.**
**Hülbeweg 8**
**W-7141 Schwieberdingen (DE)**

## Beschreibung

Stand der Technik

Die Bremskraftverteilung eines üblichen Fahrzeugs bezieht sich auf das Verhältnis zwischen Vorder- und Hinterachsbremskraft.

Dieses Verhältnis kann vom Fahrer nicht beeinflußt werden, da er mit einem Bremspedal beide Achsen abbremst, sodaß bei der Auslegung der Fahrzeugbremsen die Bremskraftverteilung ganz gezielt festgelegt werden muß.

Das Ziel einer idealen Bremskraftverteilung besteht zum einen darin, die Vorder- und Hinterachse gleich stark (bezogen auf die dynamischen Achslasten) abzubremsen, zum anderen darin, bei Kurvenbremsung die Verteilung so zu wählen, daß ein neutrales Fahrverhalten erreicht wird. Hierbei ist das Ziel des neutralen Fahrverhaltens dem Ziel der gleich großen Abbremsung übergeordnet.

Die gleich große Abbremsung (bezogen auf die dyn. Achslasten) vorn und hinten kann bei Geradeausfahrt erreicht werden. Bei Kurvenfahrt (vor allem im Kurvengrenzbereich) muß zugunsten des Fahrverhaltens die Abbremsung der Hinterachse niedriger gewählt werden als an der Vorderachse.

Die Ursache liegt darin, daß trotz Achslastverlagerung die Zentrifugalkraft im Fahrzeugschwerpunkt wirkt, sodaß die Hinterachse eine höhere Seitenführungskraft bezogen auf die dyn. Achslast übertragen muß als die Vorderachse. Diese höhere Seitenführungskraft wird durch eine geringere Abbremsung erreicht.

Die ideale Bremskraftverteilung zwischen vorn und hinten hängt von folgenden Faktoren ab:
- statische Gewichtsverteilung und Schwerpunktslage (beim jeweiligen Beladungszustand)
- Fahrzeuglängsverzögerung
- Fahrzeugquerbeschleunigung
- Motorschleppmoment
- Steigung/Gefälle

Bei der konventionellen Bremsenabstimmung ist die Bremskraftverteilung unabhängig von diesen Faktoren: sie besteht aus einem festen Verhältnis zwischen vorn und hinten und wird dadurch realisiert, daß vorn und hinten derselbe Hydraulikdruck auf unterschiedlich große Bremsen wirkt.

Die Bremskraftverteilung wird entspr. den gesetzlichen Vorschriften so gewählt, dar möglichst die Hinterachse nicht vor der Vorderachse zum Blockieren kommt. Diese Forderung ist darin begründet, daß bei zu stark gebremster Hinterachse das Fahrzeug bei Kurvenbremsung instabil werden kann, d.h. es kann zum Schleudern führen.

Nachteile der konventionellen Bremskraftverteilungen sind:
- schlechter Bremsweg, solange die Vorderräder nicht blockieren, bzw. bei ABS-Regelung (vor allem bei beladenem Fahrzeug)
- hohe Beanspruchung der Vorderradbremsen (Belagverschleiß), Platzbedarf von großen Bremsen)
- eingeschränkte Lenkbarkeit durch hohe Abbremsung der Vorderräder
- instabiles Kurvenbremsverhalten ist bei der Wirkung von folgenden Faktoren möglich:
  - Motorschleppmoment
  - Gefällefahrt
  - hohe Verzögerung (oberhalb des Schnittpunktes der idealen mit der konventionellen Verteilung)
  - Bremskraftverteilung ausgelegt für hohe Hinterachsabbremsung (die vom Gesetzgeber geforderte Verteilung bei Geradeausfahrt kann trotzdem erfüllt sein!)
  - Toleranzen im Reibwert Bremsbelag/Bremsscheibe
  - Veränderungen in der Bremsanlage (heiße Vorderradbremse, sprich Fading)

Ist bei einem Fahrzeug die ideale Bremskraftverteilung stark abhängig von der Fahrzeuglängsverzögerung, wird normalerweise ein Hinterachsdruckbegrenzer oder -minderer eingesetzt.

Ist bei einem Fahrzeug die ideale Bremskraftverteilung zusätzlich noch stark vom Beladungszustand abhängig, wird üblicherweise ein lastabhängiger Hinterachsdruckminderer oder -begrenzer verwendet.

Diese Begrenzer, bzw. Minderer sind für manche Fahrzeuge sicherlich notwendig, sie verschlechtern aber prinzipiell die Stabilität bei Kurvenbremsung (im Vergleich zur konventionellen Festabstimmung, also zur nicht abgeknickten Geraden).

Ein weiteres Problem besteht darin, daß die Druckminderer und -begrenzer ihre Funktion durch einen Fehler verlieren können, ohne daß dieser Fehler vom Fahrer bemerkt werden kann (auch im Service wird die Funktion nicht überprüft).

Aus der DE 39 23 955 A1 ist ein Bremsvorrichtung für ein zweiachsiges Fahrzeug bekannt, bei welcher der der Hinterachsbremse zugeführte Bremsdruck zur Bremskraftverteilung beeinflußt wird. Dabei ist eine Regeleinrichtung vorgesehen, die bei einer Bremsung den Bremsen der Hinterräder einen Bremsdruck zuführt, der solange größer ist als ein den Bremsen der Vorderräder zugeführter Druck wie die Drehverzögerung der Hinterräder unter einem vorgegebenen Wert bleibt. Diese Maßnahme dient dazu, einen gleichmäßigen Verschleiß aller Bremsbelege des Fahrzeugs zu erreichen. Die Herstellung einer idealen Bremskraftverteilung zwischen Vorder- und Hinterachse wird dadurch nicht erreicht.

Vorteile der Erfindung

Bei der Erfindung wird der Hinterachsdruck so geregelt, daß das langsamste Hinterrad geringfügig langsamer läuft als das schnellste Vorderrad. Bei Geradeausfahrt ist damit eine hohe Hinterachsabbremsung gewährleistet. Bei Kurvenfahrt wird infolge der Kreiskinematik und der Radlastverlagerung (links - rechts) die Hinterachse mit dieser Regelung geringer abgebremst als die Vorderachse.

Die Erfindung beschreibt eine konkrete Lösung einer elektronischen Bremskraftverteilungsregelung, wobei in der Grundausstattung ausschließlich Radgeschwindigkeitssensoren und Drucksensoren für Druckhinter- bzw. Vorderachse benötigt werden.

Figurenbeschreibung

Anhand der Zeichnung werden Ausführungsbeispiele der Erfindung erläutert.
Es zeigen:

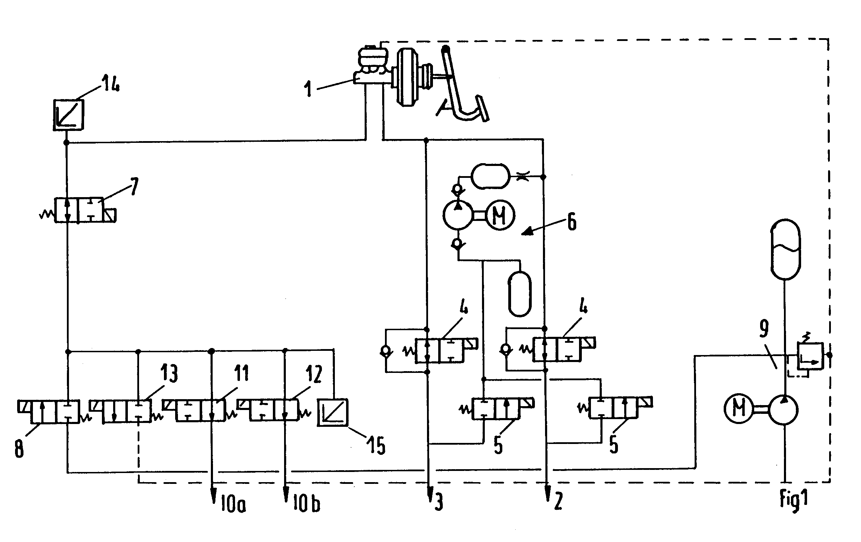

Fig. 1 ein hydraulisches Blockschaltbild, das zur Realisierung der Erfindung geeignet ist,
Fig. 2 und Fig. 3 zwei andere hydraulische Blockschaltbilder mit denen die Realisierung der Erfindung möglich ist,
Fig. 4 eine Regelkreisdarstellung, die die Erfindung beinhaltet,
Fig. 5 eine sehr umfangreiche Regelkreisdarstellung, die die Realisierung der Erfindung und einer großen Anzahl von Weiterbildungen beinhaltet.
Fig. 6-9 - Diagramme zur Erläuterung
Das in Fig. 1 dargestellte hydraulische Blockschaltbild zeigt einen Hauptbremszylinder 1, über den an den Leitungen 2 u. 3 angeschlossene Vorderradbremsen direkt bedient werden. Ventile 4 sind die Einlaßventile und Ventile 5 die Auslaßventile eines ABS und eine Pumpe 6 dient als Rückförderpumpe.

Ein Magnetventil 7 trennt im Bremsfall den Hinterachsbremskreis vom Hauptbremszylinder ab, ein weiteres Magnetventil 8 schaltet zum Druckaufbau einen Druckerzeuger 9 (Pumpe mit Motor, Druckkammer und Überdruckventil) an die bei 10a und 10b angeschlossenen Hinterradbremsen an. Einlaßventile 11 und 12 und ein Auslaßventil 13 werden zur Antiblockierregelung und für ASR gebraucht. Das Auslaßventil 13 wird auch zur erfindungsgemäßen Druckregelung eingesetzt. Mit Drucksensoren 14 und 15 werden die verschiedenen Drücke (PVA,PHA) gemessen.

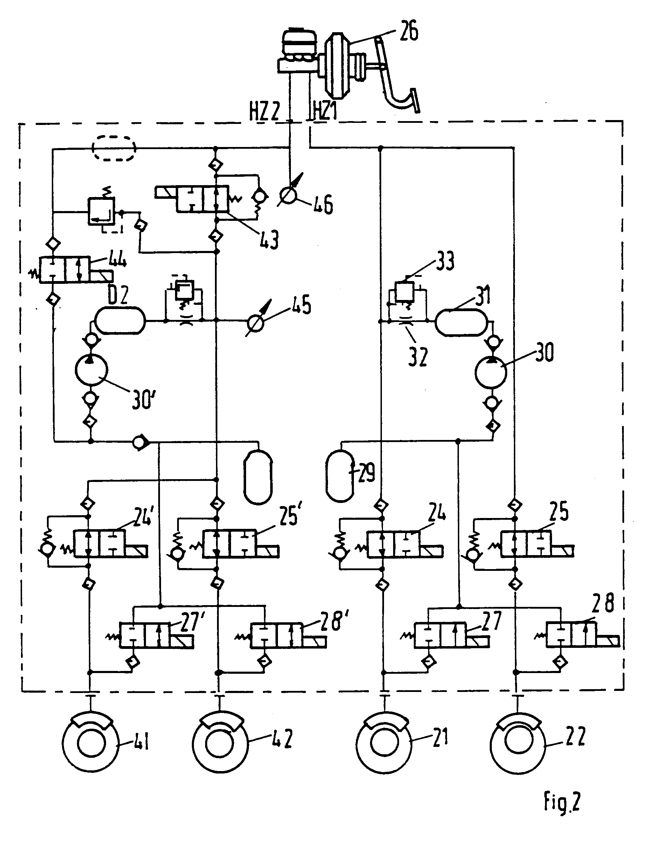

In Fig. 2 sind die Bremsen der die Vorderräder 21 und 22 über ABS-Einlaßventile 24 und 25 mit dem einen Hauptbremszylinder des Bremsaggregats 26 verbunden. Den beiden Einlaßventilen 24 und 25 sind Auslaßventile 27 und 28 zugeordnet, die zeitweise im ABS-Fall Druck zu einer Vorratskammer 29 ablassen.

Eine selbstansaugende Rückförderungspumpe 30 mit Rückschlagventilen vor dem Eingang und hinter dem Ausgang, die im ABS-Fall läuft, fördert Druckmittel über eine Druckkammer 31 und einer Drosselstelle 32 in den Bremskreis zurück. Der Drosselstelle ist ein Druckbegrenzungsventil 33 parallel geschaltet.

In nahezu völlig gleicher Weise ist der den angetriebenen Hinterrädern 41 und 42 zugeordnet Hydraulikkreis aufgebaut, der mit dem zweiten Hauptbremszylinder des Bremsaggregats 26 verbunden ist. Hier ist jedoch noch ein Umschaltventil 43 und ein Ladeventil 44 vorgesehen.

Im ASR-Fall schalten die Ventile 43 und 44 um, die Pumpe 30 läuft an und erzeugt einen Bremsdruck. Der Bremsdruck an den Rädern 41 und 42 wird durch die Ventile 24' bis 28' moduliert. Dabei müssen zum Druckaufbau die Ventile 43 und 44 in der nicht gezeigten Stellung sein. Die Rückförderpumpe 30' und die Ventile 43 und 44 können auch zur erfindungsgemäßen Druckvariation ausgenutzt werden. Es sind auch hier Drucksensoren 45 und 46 vorgesehen.

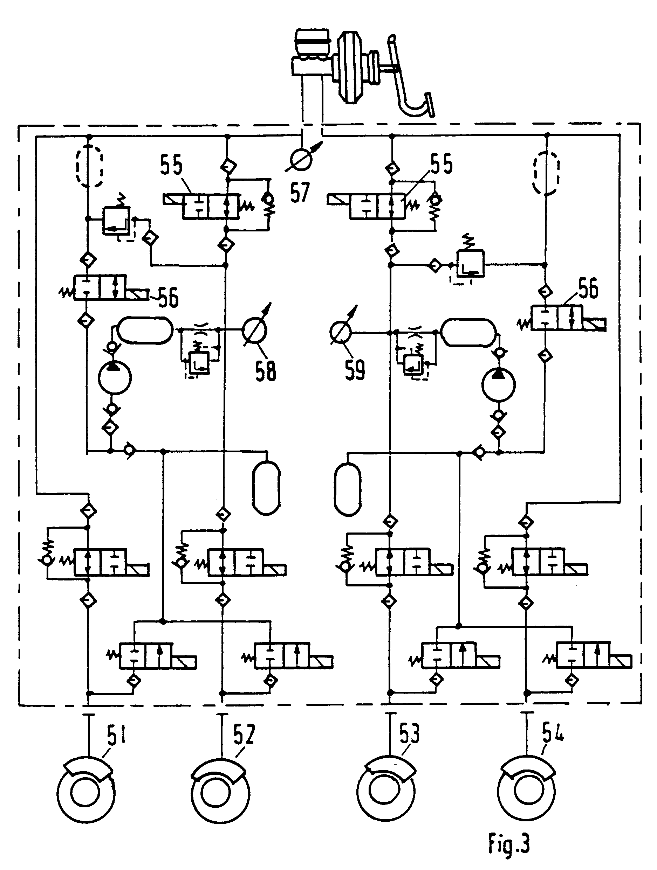

Die Fig. 3 unterscheidet sich von Fig. 2 dadurch, daß die Bremsen diagonal liegender Räder 51 und 52 bzw. 53 und 54 jeweils einem Bremskreis angehören. Auch hier wird der Bremsdruck des zuerst Druckdrehneigung zeigenden Rads der angetriebenen Achse (z.B. der Hinterachse mit den Rädern 52 und 53) unter Einbeziehung eines Umschalt-(55) und eines Ladeventils (56) moduliert.

Im Falle der erfindungsgemäßen Regelung des Hinterraddrucks müssen nunmehr beide Pumpen, beide Umschaltventile 55 und beide Ladeventile 56 synchron tätig werden. Es werden auch hier, wie später gezeigt wird, Drucksensoren 57 bis 59 benötigt.
Für das System der Fig 2 gilt:
Bei Bremsbeginn wird das Umschaltventil geschlossen, die Pumpe läuft an und das Ladeventil wird

EP 0 509 237 B1

geöffnet. Sobald der gewünschte Druck PHA erreicht ist, wird entweder das Ladeventil wieder geschlossen oder die Pumpe abgeschaltet. Wird der Druck wieder reduziert (Fahrerwunsch Bremse lösen) wird das Umschaltventil geöffnet bis der gewünschte Druck wieder erreicht ist. Muß der Druck infolge Kurvenfahrt reduziert werden, werden die Hinterachs-Auslaßventile geöffnet und die Einlaßventile geschlossen.

Das abgelassene Volumen wird von einer Specherkammer aufgenommen, solange die Pumpe nicht läuft.

Wird durch anschließende Geradeausfahrt das Volumen wieder für Druckaufbau benötigt, wird die Pumpe wieder gestartet, das Ladeventil geschlossen, solange das Volumen aus der Speicherkammer entnommen werden kann. Ähnlich jedoch in beiden Bremskreisen wird bei Fig. 3 verfahren. Die Anordnungen der Fig. 2 u. 3 haben folgende Vorteile:

- einfaches Hydroaggregat aus ASR-Serie
- keine Änderungen an Fahrzeugbremsanlage erfoderlich
- bei ABS-Ausfall wirkt die Original-Bremskraftverteilung, die ein stabiles Fahrzeugverhalten gewährleistet
- gedämpfte Padalraktion durch die beschriebene Regelphilosophie.

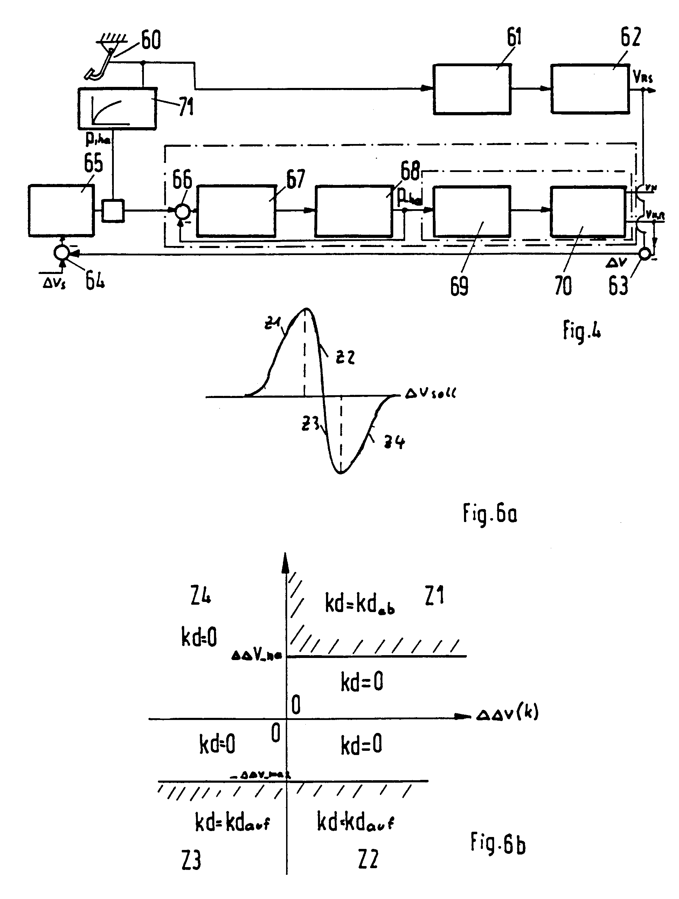

In Fig. 4 ist das Blockschaltbild eines Regelkreises aufgezeigt. Er besteht im wesentlichen aus einem Radgeschwindigkeitsregelkreis, welcher die Aufgabe hat, eine erfaßte Drehzahldifferenz zwischen schnellstem Vorderrad und langsamsten Hinterrad auf einen vorzugebenden Sollwert hin einzustellen und einem unterlagerten Druckregelkreis, der einen errechneten Solldruck (Stellgröße des Radgeschw. Reglers) an der Hinterachse einstellt.

In Fig. 4 ist ein Bremspedal 60 dargestellt, das die Bremsen 61 der Vorderachse direkt mit Druck beaufschlagt. Von den gebremsten Vorderrädern wird das schellere Rad ausgewählt. In einem Differenzbildner 63 wird die Differnz $\Delta V$ der Geschwindigkeit des schnellsten Vorderrads mit dem ausgewählten langsamsten Hinterrad gebildet; diese Differenz $\Delta V$ wird mit einem Sollwert $\Delta V_s$ in einem Differenzbildner 64 verglichen. Die Ablage vom Sollsignal wird einem Radgeschwindigkeitregler 65 zugeführt, der daraus einen Solldruck ermittelt. Die Differenz des Solldrucks und des an den Bremsen der Hinterräder herrschenden Drucks pha werden in einem Differenzbildner 66 verglichen, wobei die Ablage einen Druckregler 67 zugeführt wird, der daraus Ansteuersignale für das oder die Magnetventile 68 der Hinterräder ermittelt. Der hierdurch entstehnde Bremsdruck wirkt über die Bremsen auf die Hinterräder 70 ein.

In der Fig. 4 ist noch angedeutet, daß der Hinterachsbremsdruck durch die Idealparabel (Block 71) der Bremskraftverteilung für vollbeladenes Fahrzeug begrenzt wird (Hinterachsbremsdruck muß unterhalb der Kurve liegen).

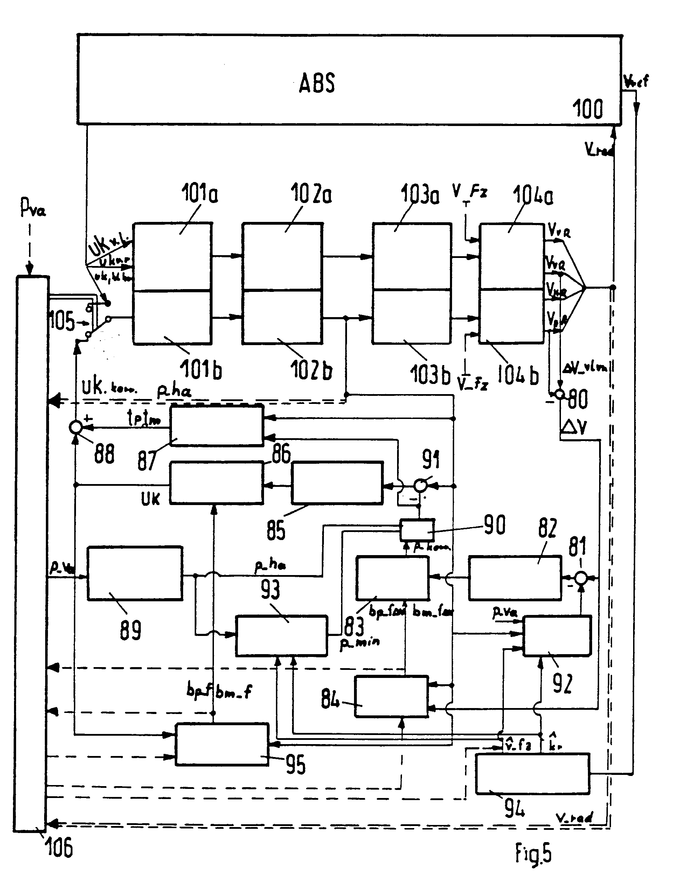

Fig. 5 zeigt ein ausführlicher dargestelltes Ausführungsbeispiel. Maßgrößen sind durch gestichelte Leistungen angedeutet.

Dort ist ein ABS 100 als Block dargestellt. Darunter sind Blöcke für die Pulsweitenmodulation (101a) der Ventile, die Magentventile (102a), die Bremsen (103a) und für die Räder (104a) der Vorderachse und entsprechende Blöcke (101b, 102b, 103b, 104b) für die Hinterachse dargestellt. Die Druckmodulation kommt an der Vorderachse nur bei ABS-Regelung in Betracht. Eine Schalteinrichtung 105 wird von einem Überwachungsblock 106 gesteuert, der den ABS-Fall von normalen Bremsfall unterscheiden kann und dann den Umschalter 105 betätigt.

Aus den gemessenen Radgeschwindigkeiten wird auch hier über eine $PT_1$-Filterung (Tiefpaß) die Differenz zwischen schnellstem Vorderrad und dem langsamsten Hinterrad ermittelt (Vergleicher 80). Dabei werden die beiden Vorderräder einer strengeren Filterung unterzogen, da im betrachteten Teilbremsbereich keine Druckmodulation an der Vorderachse erfolgt und somit die Vorderradgeschwindigkeiten als Referenz für die Hinterradgeschwindigkeiten dienen.

Diese so gebildete Größe $\Delta V$ wird mit einem je nach Fahrsituation zu ermittelnden Sollwert $\Delta V_s$ in einem weiteren Vergleicher 81 verglichen und die Abweichung $\Delta\Delta V$ wird einem Radgeschwindigeitsregelverstärker 82 zugeführt. Dieser besitzt im wesentlichen ein Proportional-Integralübertragungsverhalten der folgenden Form:

$$p_s(k) = p_{ha}(k) - k_p \Delta\Delta V(k) + k_i \cdot \sum_{j=1}^{K} \Delta\Delta V(j)$$

Hierin bedeuten

Ps (k)      der Solldruck

$P_{ha}$      der Hinterachsbremsdruck

4

$K_p$ und $K_i$     Konstante (z.B

$$K_p \approx 1 \cdot 10^2 \text{ bis } 10^3 \frac{bar}{m/s}$$

$K_i$             nahe 0 oder 0).

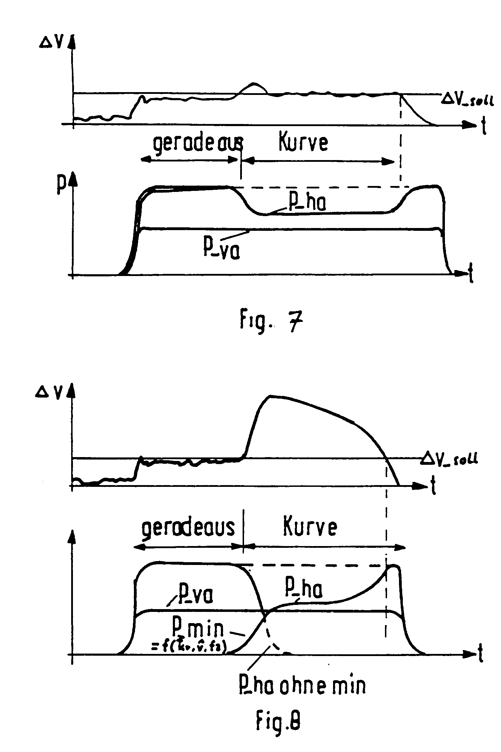

Zur Verbesserung des Störverhaltens werden je nach Systemzustand unterschiedliche Differentialanteile berücksichtigt. Hierbei werden vier Zustände unterschieden (sh. Fig. 6a und 6b).

1) Wenn das anliegende $\Delta V$ zu schnell vom Sollwert $\Delta V_s$ wegläuft (d.h. $\Delta V(k) - \Delta V(k-1)$) überschreitet einen best. Schwellwert $\Delta\Delta V\text{-max}$),

- z.B. aufgrund einer Störung (Eisplatte)-, so erfolgt ein zusätzlicher Druckabbau proportional der $\Delta V$-Zunahme zwischen vergangenem und aktuellem Zyklus( Z1).

2) Wenn das anliegende $\Delta V$ sich dem Sollwert zu schnell nähert (d.h. das betroffene Rad zu schnell wider stabil läuft) (Z2)

oder gar

3) zu schnell über den Sollwert hinausschießt,

erfolgt additiv ein Druckaufbau proportional der $\Delta V$-Abnahme zwischen vergangenen und aktuellem Zyklus.

4) Wenn das anliegende $\Delta V$ sich von einem kleineren Wert aus dem Sollwert $\Delta V_s$ nähert (Z4), wo wird kein Differentialanteil berücksichtigt.

Damit ergibt sich folgendes zustandsabhängiges Regelgesetz:

$$P_s = PHA - K_p \cdot \Delta\Delta V + K_D \cdot \Delta\Delta V' - K_i \cdot \sum_{j=0}^{K} \Delta\Delta V(j),$$

wobei $K_D$ die Regelverstärkung für den Differentialanteil ist. Mit die Regelverstärkung für den Differentialanteil ist. Mit

$$K_D = K_{D\,auf} (> 0) \text{ für } \Delta\Delta\dot{V} < \Delta\Delta V_{max} \qquad (K\text{-}1)$$
$$K_D = K_{D\,ab} (< 0) \text{ für } (\Delta\Delta\dot{V} > \Delta\Delta V_{max}) \wedge (\Delta\Delta V < 0)$$
$$KD = 0 \text{ für } (\Delta\Delta V < \Delta\Delta V_{max}) \vee (\Delta\Delta V < 0) \wedge (\Delta\Delta\dot{V} > 0)$$
$$\Delta\Delta\dot{V} = \Delta V(K) - \Delta V$$

In einem Korrekturglied 83 wird die Reglerverstärkung entsprechend der momentanen Streckervenstärkung angepaßt. Dazu wird in einem Identifikationsglied 84 die Verstärkung der Strecke Bremsen + Räder

$$\Delta V(K) = \Delta V(K-1) + K_s (pha(K) - pha \qquad (K\text{-}1)$$

mit

$$K_s = \frac{1}{K_p}$$

durch eine PTH1-Filterung mit zustandsabhängigen Filteroeffizienten

$$y(\Delta p) = \frac{fil}{\Delta p + fil}$$

mit

$$\Delta p = pha(K) - pha \qquad (K\text{-}1)$$

mit fil = Gewichtungsfaktor (in der Größenordnung einer mittleren Hinterachsdruckänderung) geschätzt gemäß der Gleichung:

$$bp\_f,\Delta v = \frac{[\Delta v(K) - \Delta v(K-1)] + fil \cdot bp\_f,\Delta v}{p\,ha\,(K) - p\,ha\,(K-1) + fil} =$$

Druck aufbau verstärkung

$$bm\_f,\Delta p = \frac{[\Delta v(K) - \Delta v(K-1) - fil \cdot bm\_f,\Delta p}{p\,ha\,(K) - p\,ha\,(K-1) - fil} =$$

Druck abbau verstärkung

Das korrigierte Ausgangssignal $p_s$ - korr. des Radgeschwindigkeitsregelers 82, wird anschließend in einen Druckregelkreis geführt (66-68 in Fig. 4; 85-88 und 101b und 102b in Fig. 5) in welchem der gemessene HA-Druck auf diesen $p_s$-korr eingestellt wird. Der geregelte HA-Druck p-ha wirkt nun auf die Regelstrecke, die die Systeme Hinterradbremsen, Hinterräder, Reifen und Straße umfaßt.

Die beiden Hinterradgeschwindigkeiten bilden die Ausgangsgrößen der Strecke. Wie bereits beschrieben wird das gemessene Radgeschwindigkeitssignal des langsameren Hinterrads mit dem des schnelleren Vorderrads verglichen und die Abweichung dem Vergleicher 81 zugeführt.

Aus dem gemessenen Vorderachsdruck p-va (Sensoren4, bzw. 46 bzw. 57) wird in einem Block 89 nach der Beziehung

$$ps,ha = \frac{Konst\,1 \cdot 6}{C_{st,ha}} \cdot \left[\sqrt{\left(\frac{1-\psi}{0,4}\right)^2 + \frac{Konst\,2 \cdot C_{st\,va} \cdot pva}{G}}\right.$$

$$\left. - \frac{1-\psi}{0,4} - \left(\frac{Konst\,3 \cdot C_{st\,va} \cdot pva}{G}\right)\right.$$

entsprechend der optimalen Bremskraftverteilung für Geradeausbremsung und beladenem Fahreug ein obere Grenze für den im Radgeschwindigkeitsregeler ermittelten Hinterachs-solldruck p-s, korr ermittelt Dabei ist

    G:         Fahrzeuggewicht (FZ beladen)

    $\psi$ :      statischer HA-Lastanteil

$$\frac{G\,ha}{-G\,FZ}$$

    $C_{stva}$ :    Bremsenkennwert VA

    $C_{stha}$ :    Bremsenkennwert Ha

Konst. 1 = $r_{dyn,HA}/(2 \cdot A_{HA} \cdot r_{HA} \cdot \eta_{HA})$

Konst. 2 = $A_{va} \cdot r_{va} \cdot 2 \cdot \eta_{va}/(\chi \cdot r_{dyn,va})$

Konst. 3 = konst. 2 $\cdot \chi$

Hierin sind:

$r_{dyn,HA}$ :     dynamischer Reifenhalbmesser Hinterräder

$r_{dyn,VA}$ :     dynamischer Reifenhalbmesser Vorderräder

$A_{HA}$ :     Radzylinderfläche Hinterräder

$A_{VA}$ :     Radzylinderfläche Vorderräder

$r_{HA}$ :     wirksamer Reibradius Hinterradbremsen

$r_{VA}$ :     wirksamer Reibradius Vorderradbremsen

$\eta_{HA}$ :     Wirkungsgrad Hinterradbremsen

$\eta_{VA}$ :     Wirkungsgrad Vorderradbremsen

$\chi$ : radstandsbezogene Schwerpunktshöhe Mit dieser oberen Begrenzung erzielt man bei der Regelung von $\Delta$V auf einen festen Sollwert von ca. 0,2 m/s hin in den überweigenden Bremssituationen neutrales Fahrzeugverhalten: bei Geradeausbremsungen wird der Hinterachs-Druck entsprechend der idealen Bremskraftverteilung (Standardparabel) eingeregelt und nur bei eventuellen Störungen ($\Delta$V läuft auf →Regelabweichung) von der Straße her der Druck kurzzeitig abgebaut. Bei Kurvenbremsungen (großer Radius) wird der Hinterachs-Druck stationär auf ein gegenüber dem Standardparabel-Druck niedrigeres Druckniveau eingestellt, sodaß sich ebenfalls ein neutrales Fahrzeugverhalten ergibt. (Dies zeigt Fig. 7) Bei engeren Kurven wird der Einfluß der Hinterachs-Druckabsenkung auf eine entsprechende $\Delta$V-Änderung jedoch ziemlich gering; dies hat zur Folge, daß sich das in solchen Situationen aufgrund der Kreisskinematik ergebende große $\Delta$V auch bei noch so großem Hinterachs-Druckabbau nicht mehr auf den festen Sollwert regeln läßt, wodurch das Fahrzeug aufgrund von drucklosen Hinterachsbremsen ein untersteuerndes Fahrverhalten zeigt.

Für diese Problematik bei engen Kurven gibt es folgend Lösungen:

1) Vorgabe eines von der Fahrzeuggeschwindigkeiten und der geschätzten "Enge der Kurve" (aus Block 94) abhängigen Hinterachs-Minimaldrucks p-min (Block 93), der von Hinterachs-Solldruck $p_s$-korr nicht unterschritten werden darf (sh. Fig. 8); bei höheren Geschwindigkeiten und großen Kurvenradien ist p-min nicht wirksam, damit hier aus Stabilitätsgründen der HA-Druck bei eventuellen Radinstabilitäten kurzzeitig bis auf 0 abgebaut werden kann.

2) Anpassung von $\Delta$V-soll an die Fahrzeuggeschwindigkeit $V_{Ref}$ bzw. an aus Fahrzeuggeschwindigkeit und Drucksignalen errechneten Größen, z.B. $K_r$ (im Block 92).

Diese Begrenzungen nach oben und unten werden in einem Begrenzungsblock 90 vorgenommen. zu 1)

Die im ABS-Regler 100 ermittelten Referenzgeschwindigkeiten $v_{ref}$, welche radindividuell einen Schätzwert für die Fahrzeuggeschwindigkeit darstellen, werden dem Block 91 zur Abschätzung der Fahrzeuggeschwindigkeit gemäß der Gleichung

$$V_{FZ} = 0{,}25 \cdot (V_{Ref1} + V_{Ref2} + V_{Ref3} + V_{Ref4}) \text{ zugeführt}$$

Die FZ-Geschwindigkeit wird dabei durch die Drucksignale überwacht und zur Abschätzung der "Enge der Kurve" gemäß der Beziehung

$$\hat{K}_r = sw \left( \frac{V_{FZ}}{\Delta V_{LR}} - 0{,}5 \right)$$

mit sw: Spurweite des FZ an VA

$\Delta V_{LR}$:     Funktion von Vorderradreferenzdifferenz und Hinterradreferenzdifferenz

verwendet.

$$\Delta V_{LR} = f(|V_{Ref1} - V_{Ref3}|; |V_{Ref2} - V_{Ref4}|)$$

Die beiden Schätzwerte $\hat{V}$-Fz und $\hat{k}_r$ werden einem Block 93 zugeführt, welcher als Ausgangsgröße p-min als unteren Begrenzungsdruck für den HA-Solldruck abgibt.

Dabei gilt die Beziehung:

$$p_{min} = \left( \frac{Konst1}{\hat{K}_r} + \frac{Konst2}{\hat{v}_{FZ} + Konst3} + Konst4 \right) \cdot p_{s,ha}$$

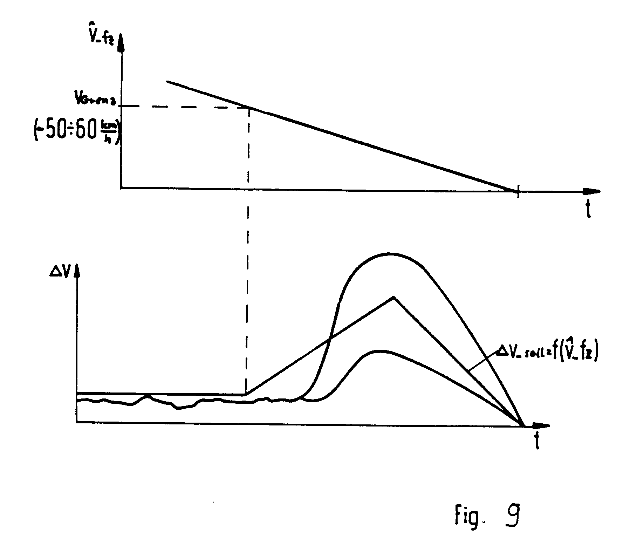

wobei dei Konstanten konst1, konst2, konst3 und konst4 im Fahrversuch ermittelt werden - und zwar in der Hinsicht, daß in engen Kurven p-min ungefähr p-va-Niveau einnimmt (Fig. 8) (z. B Konst 1 = 20[m], Konst 2 = 1[m/sec] Konst 3 = 1[m/s], Konst 4 = 0[bar] Bei Unterschreitung einer bestimmten Geschwindigkeit $V_{grenz}$ wird ein Sollwertverlauf als Funkton von v -Fz in der Art vorgegeben, daß dieser nur für kritische Kurvenbremsungen (d.h. engere Kurven bei höheren Geschwindigkeiten) überschritten wird (Fig. 9).

Im unterlagerten Druckregelkreis wird der anliegende Hinterachs-Druck auf den im Radgeschwindigkeitsregler ermittelten Solldruck p-korr geregelt. Dazu wird der gemessene Hinterachs-Druck p-ha mit dem errechneten Solldruck p-korr im Verleicher 91 verglichen und diese Differenz einem Druckregeler 85 zugeführte, welcher ein Proportional-Integralübertragunsverhalten besitzt.

Die Regelstrecke umfaßt hier die Komponente Hinterachsventil. Da entsprechend der Druck-Volumen-Kernlinie der Bremsanlage die bei einer bestimmten Ventilansteuerzeit erzielte Druckänderung von Druckniveau im Radbremszylinder selbst und von der Temperatur abhängt, wird dieser Druckgradient in einem Identifikationsglied 95 ermittelt gemäß folgender Beziehungen:

$$bpf = \frac{P_{ha,f(K)} - P_{ha,f(K-1)} + fil \cdot bpf}{u_{K,Korr}(K-1) - t_p(K-1) + fil} \qquad Druckaufbau$$

$$bmf = \frac{P_{ha,f(K)} - P_{ha,f(K-1)} - fil \cdot bmf}{u_{K,Korr}(K-1) - t_m(K-1) - fil} \qquad Druckabbau$$

Es muß hierbei zwischen Druckauf- und Druckabbau unterschieden werden, weil dabei unterschiedliche Druckänderungsgeschwindigkeiten wirken. Diese nach obigen Gleichungen ermittelte Streckanverstärkung wird als Reziprogwert für die Proportionalverstärkung des Druckregelers 85 verwendet (Verstärkungskorrektur Block 86). Damit hat das Regelgesetz des Druckreglers folgendes Aussehen:

$$u_K^+ = \left( P_{s,Korr}(K) - P_{ha}(K) \right) \cdot \frac{1}{bpf} + K_i \sum_{j=1}^{K} \left( P_{s,Korr}(j) - P_{ha}(j) \right)$$

Druckaufbau

$$u_K^- = \left( P_{s,Korr}(K) - P_{ha}(K) \right) \cdot \frac{1}{bmf} + K_i \sum_{j=1}^{K} \left( P_{s,Korr}(j) - P_{ha}(j) \right)$$

Druckabbau

Die für Druckaufbau und Druckabbau jeweils geltenden Ventilansprechzeiten tp,tm (aus dem Schätzblock 87) werden in einem Addierer 88 durch Addition zu der errechneten Netto-Ventilansteuerzeit berücksichtigt. Die Ventilansprechzeiten werden in Block 87 mittels eines (starken) Filters 1. Ordnung gemäß den Beziehungen

$$t_p = fil_{t_p} \cdot t_p + (1 - fil_{t_p}) \cdot [p_{s,korr}(K-1) - p_{ha}(K)] \cdot ktp ; > 0$$

*Druckaufbau*

$$t_m = fil_{t_m} \cdot t_m + (1 - fil_{t_m}) \cdot [p_{s,korr}(K-1) - p_{ha}(K)] ktm ; < 0$$

*Druckabbau*

(ktp und ktm liegen im Berich zwischen 1 und 5). abgeschätzt und aktualisiert.

Dabei sind ktp u. ktm Verstärkungsfaktoren, die im Fahrversuch hinsichtlich guten Führungsverhaltens des Druckreglers einzustellen sind. Diese Errechnung der Ventilanspechzeiten bringt den wesentlichen Vorteil, daß Streuungen in den Ventilansprechzeiten und zeitlich sich ändernde Ansprechzeiten (z.B. durch "Ventilalterung") berücksichtigt und entsprechend korrigiert werden.

Über den Schalter 105 kann eine Umschaltung zwischen der erfindungsgemäßen Druck- und der ABS-Regelung für die Hinterachse erfolgen. Dabei gilt folgende Übergangslogik:

Im Teilbremsbereich, d.h. wenn noch kein Vorderrad die ABS-Ansprechschwelle erreicht hat, wird die HA gemäß der Erfindung gergelt.

Bedingungen für den Einstieg in ABS-Regelung sind:

Erst wenn ein Vorderrad bereits in ABS-Regelung ist und das andere Vorderrad auch schon eine bestimmte Filterzeit-Druck-Abbau verlangte, wird umgeschaltet.

Bedingungen für den Anstieg aus ABS sind:

Wenn die errechnete Ventilansteuerzeit eines Vorderrads über eine bestimmte Zeit die maximale Öffnungszeit ( Zykluszeit;hier: 20 ms) überschreitet (d.h. Vordurck zu gering ist oder

wenn beide Vorderräder eine bestimmte Minimalgeschwindigkeit unterschritten haben, wird rückgeschaltet.

Es werden vorzugsweise stets - sowohl im Teilbremsbereich als auch im ABS-Fall als auch während der jeweiligen Übergänge- beide Algorithmen durchlaufen (ABS und Druckregelung). Entsprechend der oben beschriebenen Logik wird dann die maßgebende Ventilansteuerzeit, also entweder die im ABS-Regler errechnete oder die im Druck-Regler errechnete, zur Ansteuerung der Ventiltreiber herangezogen.

**Patentansprüche**

1. Bremsdruckregelanlage für ein Fahrzeug,
   - mit Mitteln (67, 68, 69, 70), die den Druck wenigstens in den Bremsen einer Hinterachse des Fahrzeugs steuern, dadurch gekennzeichnet,
   - daß Mittel (63) vorgesehen sind, die die Differenz (ΔV) zwischen der Radgeschwindigkeit des schnellsten Vorderrades und der des langsamsten Hinterrades bilden,
   - und daß Regelmittel (64, 65) vorgesehen sind, die die den Hinterradbremsen zugeführten Bremsdrücke derart beeinflussen, daß ein vorgegebener Wert (ΔVs) dieser Differenz eingestellt wird, so daß das langsamste Hinterrad um diesen vorgegebenen Wert langsamer als das schnellste Vorderrad läuft.

2. Bremsdruckregelanlage nach Anspruch 1, dadurch gekennzeichnet, daß im Bremsfall der Hinterachsbremskreis durch ein Magnet-Ventil vom Hauptbremszylinder abgetrennt wird und für den Hinterachsbremskreis ein Druckerzeuger wirksam gemacht wird und mittels wenigstens eines Magnetventils der Bremsdruck geregelt wird.

3. Bremsdruckregelanlage nach Anspruch 2, dadurch gekennzeichnet, daß der Bremsdruckerzeuger die Rückförderpumpe eines ABS ist und das Magnetventil zur Abrennung und das wenigstens eine Magnetventil durch die beiden für die Antriebsschlupfregelung vorgesehenen Magnetventile gebildet werden.

4. Bremsdruckregelanlage nach Anspruch 1 dadurch gekennzeichnet, daß bei diagonaler Bremskreisaufteilung im Bremsfall die Hinteradbremsen durch je ein Magnetventil vom Hauptbremszylinder abgetrennt werden und für die Bremsen der Hinterräder wenigstens ein Druckerzeuger wirksam gemacht

EP 0 509 237 B1

wird und mittels wenigstens je eines Magnetventils der Bremsdruck geregelt wird.

5. Bremsdruckregelanlage nach Anspruch 4, dadurch gekennzeichnet der wenigstens ein Bremsdruckerzeuger durch die Rückförderpumpen eines ABS für die beiden Bremskreise gebildet wird, und jeweils das Magnetventil zur Trennung und das wenigstens eine Magentventil durch die beiden zur Antriebsschlupfregelung und durch ein für die Antiblockierregelung vorgesehenes Ventil gebildet werden.

6. Bremsdruckregelanlage nach einem der Ansprüche 1 bis 5 dadurch gekennzeichnet, daß der Vorder- radbremsdruck ermittelt wird, daß aus der Beziehung oder der abgespeicherten Kurve der ideale Bremskraftverteilung der maximal zulässige Hinterachsbremsdruck ermittelt wird und daß der ermittelte hinterachsbremsdruck auf den maximal zulässigen Hinterachsbremsdruck begrenzt wird.

7. Bremsdruckrgelanlage nach einem der Ansprüche 1-6, dadruch gekennzeichnet, daß bei Fahrt in engen Kurven ein ninimaler Hinterachsbremsdruck vorgesehen ist, der nicht unterschritten werden darf.

8. Bremsdurckregelanlage nach einem der Ansprüche 1-7, dadurch gekennzeichnet, daß sie einen überlagerten Radgeschwindigkeitsregelkreis und einen unterlagerten Druckregelkreis aufweist, der den vom Radgeschwindigkeitsregelkreis vorgegebenen Bremsdruck einregelt.

## Claims

1. Brake-pressure control system for a vehicle,
   - with means (67, 68, 69, 70) which control the pressure at least in the brakes of a rear axle of the vehicle, characterized in that
   - means (63) are provided which form the difference ($\Delta V$) between the wheel speed of the fastest front wheel and that of the slowest rear wheel,
   - and in that control means (64, 65) are provided which influence the brake pressures fed to the rear-wheel brakes in such a way that a specified value ($\Delta Vs$) for this difference is established, with the result that the slowest rear wheel runs more slowly than the fastest front wheel by this specified value.

2. Brake-pressure control system according to Claim 1, characterized in that, in the case of braking, the rear-axle brake circuit is isolated from the brake master cylinder by a solenoid valve and a pressure generator is activated for the rear-axle brake circuit and the brake pressure is controlled by means of at least one solenoid valve.

3. Brake-pressure control system according to Claim 2, characterized in that the brake-pressure generator is the return pump of an ABS, and the solenoid valve for isolation and the at least one solenoid valve are formed by the two solenoid valves provided for traction control.

4. Brake-pressure control system according to Claim 1, characterized in that, in the case of braking with diagonal brake-circuit division, the rear-wheel brakes are each isolated from the brake master cylinder by a respective solenoid valve and at least one pressure generator is activated for the brakes of the rear wheels and the brake pressure is controlled by means of at least one solenoid valve in each case.

5. Brake-pressure control system according to Claim 4, characterized in that the at least one brake- pressure generator is formed by the return pumps of an ABS for the two brake circuits, and the solenoid valve for isolation and the at least one solenoid valve are in each case formed by the two valves for traction control and by a valve provided for anti-lock control.

6. Brake-pressure control system according to one of Claims 1 to 5, characterized in that the front-wheel brake pressure is determined, in that the maximum permissible rear-axle brake pressure is determined from the relationship or the stored curve for the ideal brake-force distribution and in that the rear-axle brake pressure determined is limited to the maximum permissible rear-axle brake pressure.

7. Brake-pressure control system according to one of Claims 1-6, characterized in that, in the case of travel around tight bends, a minimum rear-axle brake pressure is provided which must not be exceeded.

10

8. Brake-pressure control system according to one of Claims 1-7, characterized in that it has a higher-order wheel-speed control circuit and a lower-order pressure control circuit which sets the brake pressure specified by the wheel-speed control circuit.

**Revendications**

1. Installation de réglage de la pression de freinage pour un véhicule, avec des moyens (67, 68, 69, 70) qui commandent la pression au moins dans les freins d'un essieu arrière du véhicule,
installation caractérisée en ce que des moyens (63) sont prévus, qui forment la différence ($\Delta V$) entre la vitesse de la roue avant la plus rapide et celle de la roue arrière la plus lente, et en ce qu'il est prévu des moyens de réglage (64, 65) qui influencent les pressions de freinage amenées aux freins des roues arrière de façon qu'une valeur prédéfinie ($\Delta V_s$) de cette différence soit réglée, de sorte que la roue arrière la plus lente tourne de cette valeur prédéfinie plus lentement que la roue avant la plus rapide.

2. Installation de réglage de la pression de freinage selon la revendication 1, caractérisée en ce que, en cas de freinage, le circuit de freinage de l'essieu arrière est séparé du cylindre principal de freinage par une électrovanne, et pour le circuit de freinage de l'essieu arrière, un générateur de pression est activé, et au moyen d'au moins une électrovanne, la pression de réglage est réglée.

3. Installation de réglage de la pression de freinage selon la revendication 2, caractérisée en ce que le générateur de pression est la pompe de refoulement d'un ABS, et l'électrovanne pour la séparation ainsi que l'électrovanne prévue à au moins un exemplaire sont constituées par les deux électrovannes prévues pour la régulation anti-glissement à l'entraînement.

4. Installation de réglage de la pression de freinage selon la revendication 1, caractérisée en ce que lors d'un partage en diagonale du circuit de freinage, en cas de freinage les freins des roues arrières sont séparés respectivement par une électrovanne du cylindre principal de freinage, et pour le freinage des roues arrières au moins un générateur de pression est activé et la pression de freinage est réglée par respectivement au moins une électrovanne.

5. Installation de réglage de la pression de freinage selon la revendication 4, caractérisée en ce que le générateur de pression prévu à au moins un exemplaire est constitué par les pompes de refoulement d'un ABS pour les deux circuits de freinage, et respectivement l'électrovanne pour la séparation et l'électrovanne prévue à au moins un exemplaire sont constituées par les deux vannes pour la régulation du patinage de l'entraînement et par une vanne prévue pour la régulation antiblocage.

6. Installation de réglage de la pression de freinage selon une des revendications 1 à 5, caractérisée en ce que la pression de freinage des roues avant est déterminée, qu'à partir de la relation ou de la courbe mémorisée de la répartition idéale de l'effort de freinage, la pression maximale de freinage de l'essieu arrière est déterminée, et en ce que la pression de freinage de l'essieu arrière déterminée est limitée à la pression maximale admissible de freinage de l'essieu arrière.

7. Installation de réglage de la pression de freinage selon une des revendication 1 à 6, caractérisée en ce que, lors de la marche dans des courbes resserrées, il est prévu une pression minimale de freinage de l'essieu arrière, qui ne doit pas être franchie vers le bas.

8. Installation de réglage de la pression de freinage selon une des revendications 1 à 7, caractérisée en ce qu'elle comporte un circuit de réglage de vitesse de roue prioritaire, et un circuit de réglage de pression secondaire, qui règle la pression de freinage prédéfinie par le circuit de réglage de la vitesse de roue.

Fig1

Fig.2

Fig.3

Fig.4

Fig.6a

Fig.6b

15

Fig.5

Fig. 7

Fig. 8

Fig. 9